Europäisches Patentamt

European Patent Office

Office européen des brevets

(19)

(11) Numéro de publication: **0 002 415**
**B1**

(12) **FASCICULE DE BREVET EUROPEEN**

(45) Date de publication du fascicule de brevet: **04.11.81**

(51) Int. Cl.³: **H 04 B 17/00**

(21) Numéro de dépôt: **78400207.3**

(22) Date de dépôt: **01.12.78**

(54) **Procédé et dispositif de comptage des erreurs de transmission dans une liaison hertzienne numérique.**

(30) Priorité: **05.12.77 FR 7736604**

(43) Date de publication de la demande:
**13.06.79 Bulletin 79/12**

(45) Mention de la délivrance du brevet:
**04.11.81 Bulletin 81/44**

(84) Etats Contractants Désignés:
**DE GB NL**

(56) Documents cités:
**IEEE INTERNATIONAL CONFERENCE ON COMMUNICATIONS, vol. 10, 1974, New York, USA**
**FRAME et al. "LD-4 digital repeatered line", page 8D-1 à 8D-5**

**PROCEEDINGS OF THE NATIONAL ELECTRONICS CONFERENCE, vol. 28, 1973, OAK BROOK (USA)**
**BUTTS "Microwave data path switching", pages 98—101**

(73) Titulaire: **SOCIETE ANONYME DE TELECOMMUNICATIONS**
**40 avenue de New York**
**F-75116 Paris (FR)**

(72) Inventeur: **Payen, Georges André**
**10 rue Jules Guesde**
**F-92120 Montrouge (FR)**

(74) Mandataire: **Bloch, Robert**
**39 avenue de Friedland**
**F-75008 Paris (FR)**

Courier Press, Leamington Spa, England.

**Procédé et dispositif de comptage des erreurs de transmission dans une liaison hertzienne numérique.**

La présente invention concerne un procédé et dispositif de comptage des erreurs de transmission dans une liaison hertzienne numérique.

Pour éviter tout risque d'interruption de la transmission sur une liaison hertzienne, il est indispensable d'analyser en permanence la qualité de cette liaison, et de commuter automatiquement sur un canal de secours lorsque la qualité devient suffisante.

Dans le cas d'un faisceau hertzien numérique, cette appréciation de qualité revient à détecter les erreurs de transmission sur les éléments binaires et à demander la commutation sur le canal de secours lorsque la qualité descend en dessous d'un seuil déterminé.

Il se trouve que, dans le cas de transmissions hertziennes, le taux d'erreurs varie très vite autour du seuil: il est typique de passer d'un taux d'erreurs de $10^{-6}$, encore acceptable, à un taux d'erreurs de $10^{-3}$, qui rend le faisceau inutilisable, pour une variation de champ reçu sur un tronçon de l'ordre de 3 ou 4 dB.

D'autre part les phénomènes d'évanouissement qui affectent la transmission peuvent atteindre 100 dB par seconde.

Dans ces conditions extrêmes, on ne dispose au total que de 30 à 40 ms pour détecter l'évanouissement et effectuer les opérations de commutation sur le canal de secours.

On connaît deux procédés permettant d'apprécier la qualité de la transmission en mesurant le taux d'erreurs. Soit l'on mesure la durée nécessaire pour compter un nombre déterminé d'erreurs, soit l'on compte les erreurs qui se produisent pendant une durée fixe, comme l'enseigne l'article de FRAME et Al. publié I E E E, International conference on communications, volume 10, 1974, pages 8D1 à 8D5. Cependant cet article concerne un dispositif s'appliquant à la transmission par câble et ne permettant la commutation qu'après au moins un temps d'attente de 2s, à partir du moment où l'on compte un taux d'erreurs supérieur au seuil. Il est donc inapte à détecter les évanouissements rapides inhérents aux transmissions hertziennes.

D'autre part dans les dispositifs à durée de comptage fixe, cités en second, on pourrait choisir une durée de comptage très petite, de l'ordre de quelques millisecondes, mais la valeur correspondante du seuil serait trop basse pour le cas le plus fréquent où l'évanouissement évoluerait moins vite.

L'invention vise un procédé de comptage d'erreurs dans une liaison hertzienne numérique qui ne comporte pas l'inconvénient ci-dessus des méthodes connues, et qui soit donc beaucoup plus souple.

A cet effet la présente invention concerne un procédé de comptage d'erreurs dans une liaison hertzienne numérique en vue de produire une demande de commutation sur un canal de secours lorsque la qualité de la liaison devient insuffisante, caractérisé par le fait qu'on compte chaque fois les erreurs sur des périodes de comptage qui s'achèvent lorsqu'un nombre fixe N d'erreurs a été compté, mais qui ne dépassent pas une durée $t_2$, les périodes de comptage se succédant sans interruption, sauf dans le cas où N erreurs sont comptées en un temps inférieur à une durée $t_1$ inférieure à $t_2$, auquel cas une nouvelle période de comptage ne commence qu'après écoulement de la durée $t_1$, et on émet une demande de commutation lorsqu'au cours d'une série de $n_1$ périodes consécutives, un comptage de N erreurs a eu lieu à chaque période.

Le procédé d'appréciation ainsi défini portant sur des nombres d'erreurs, et non sur des taux d'erreurs, convient aussi bien lorsque la vitesse d'évanouissement est très élevée que lorsqu'elle est lente.

L'invention a également pour objet un dispositif de comptage pour la mise en oeuvre du procédé selon la revendication 1, caractérisé par le fait qu'il comprend un compteur d'erreurs produisant un signal d'erreur lorsqu'il a compté N erreurs, une base de temps définissant une période $t_1$ et une seconde période $t_2 > t_1$ à partir de la même origine des temps, un registre relié au compteur, un circuit logique relié à la base de temps, au compteur et agencé pour remettre à zéro le compteur et la base de temps dès l'émission d'un signal d'erreur, ou au bout d'un temps $t_2$ si aucun signal d'erreur n'est émis, les périodes de comptage se succédant ainsi sans interruption sauf dans le cas où un signal d'erreur est émis en un temps inférieur à $t_1$, la remise à zéro n'ayant alors lieu qu'à l'issue du temps $t_1$, et un circuit délivrant une demande de commutation lorsque le regidtre a enregistré $n_1$ signaux d'erreurs en $n_1$ périodes consécutives.

L'invention sera bien comprise à la lecture de la description suivante, faite en se référant au dessin annexé dans lequel:

— la figure 1 représente sous la forme de schéma-blocs, le dispositif de comptage d'erreurs selon l'invention; et

— la figure 2 représente un exemple de réalisation du dispositif de la figure 1.

Le dispositif représenté comprend un compteur d'erreurs 1 relié à une borne de sortie ER d'un détecteur d'erreurs (non représenté), une base de temps 2, un circuit logique 3, un registre à décalage 4 et une bascule 5 reliée à un dispositif de commutation. Ce dispositif fait partie d'une station hertzienne et sert à analyser la qualité du signal numérique reçu sur une voie. Lorsque la qualité de la transmission devient insuffisante, la bascule 5 passe à l'état "1" et déclenche aussitôt une demande de commutation sur le canal de secours de façon à éviter toute interruption de la transmission.

Le compteur 1 reçoit une impulsion à chaque détection d'une erreur sur un élément du train numérique. La manière, dont s'opère la détection des erreurs, dépend en particulier de la structure du signal numérique reçu, et n'a pas d'importance dans le cadre de cette invention.

Le compteur 1 émet une impulsion SA lorsqu'il a reçu N impulsions, N étant, dans l'exemple décrit, choisi égal à 5. L'impulsion SA est appliquée au registre 4 et au circuit logique 3.

Le circuit logique 3 reçoit en outre de la base de temps 2 des impulsions $T_1$ et $T_2$ à la fin de deux périodes $t_1$ et $t_2$, $t_1$ étant inférieur à $t_2$. $t_1$ et $t_2$, dans cet exemple, valent respectivement 2 ms et 100 ms. Le circuit logique 3 est agencé pour émettre un signal RT autorisant l'enregistrement par le registre 4 du signal émis par le compteur et simultanément un signal Z pour la remise à zéro du compteur 1 et de la base de temps 2.

Le principe de fonctionnement est le suivant:

Si une impulsion SA est émise avant écoulement du temps $t_1$, le circuit logique 3 émet les signaux RT et Z à l'instant $t_1$.

Si une impulsion SA est émise à un instant t compris entre $t_1$ et $t_2$, le circuit logique 3 émet immédiatement un signal RT et un signal Z.

Dans le troisième cas possible, qui est celui où la qualité de la transmission est satisfaisante, le circuit logique 3 n'a reçu aucune impulsion SA lorsqu'il reçoit l'impulsion $T_2$. Dans ce cas, le circuit logique délivre un signal RT et une impulsion Z de remise à zéro du compteur 1 et de la base de temps 2 á l'instant $t_2$. Le registre 4, recevant le signal RT, enregistre alors l'état du signal de sortie du compteur 1, qui sera l'état "1" si l'impulsion SA est négative, ou réciproquement.

Pour éviter le déclenchement d'une commutation à la suite de phénomènes de très courte durée, le registre 4 n'envoie une impulsion à la bascule 5 que lorsqu'il a enregistré un nombre $n_1$ d'impulsions SA consécutives. Ce nombre $n_1$ est choisi égal à 3 dans l'exemple décrit.

Lorsque la bascule 5 passe à l'état "1", une demande de comtation sur le canal de secours est établie. Il faut ensuite attendre que la qualité de la liaison soit revenue à un niveau satisfaisant pour effectuer la commutation inverse. Il est préférable en pratique de prévoir des critères de qualité plus sévères pour la commutation dans ce sens, de façon à éviter des commutations trop fréquentes. Dans l'exemple décrit, on ne déclenchera la commutation que lorsque $n_2$ périodes de comptage de durée $t_2$ se seront écoulées sans que le registre 4 ait reçu une impulsion SA, $n_2$ étant supérieur à $n_1$ et choisi égal à 8 dans cet exemple.

Mais on pourrait aussi prévoir de donner à N une valeur supérieure à celle indiquée pour la commutation sur le canal de secours.

La valeur $t_1$ est choisie égale à 2 ms pour éviter que des phénomènes transitoires puissent déclencher une commutation. La valeur de 100 ms choisie pour $t_2$ est relative à une transmission à 34 Mbits/s. Pour un champ fixe, le taux d'erreur minimal qui déclenche la commutation est de 5 erreurs/100 ms, soit environ $1.5.10^{-6}$.

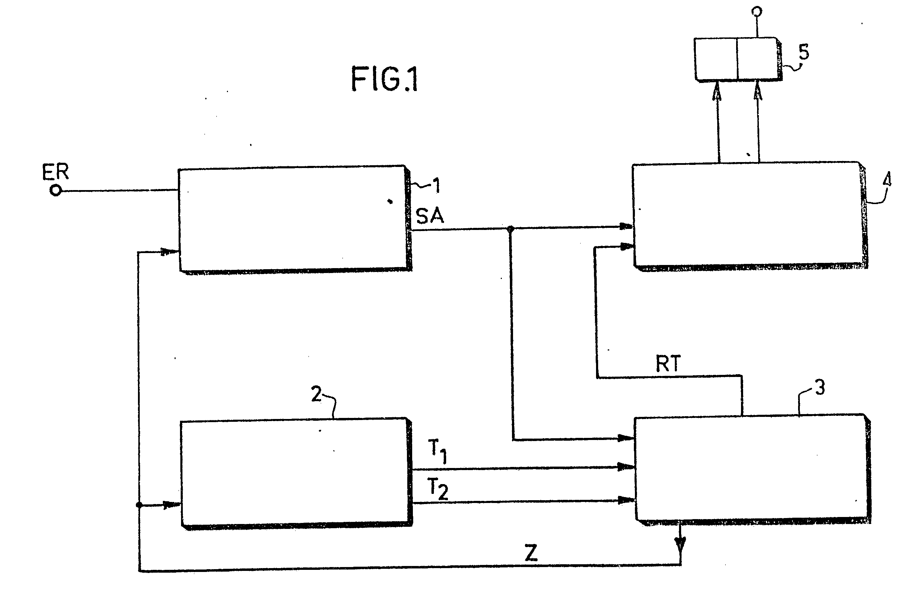

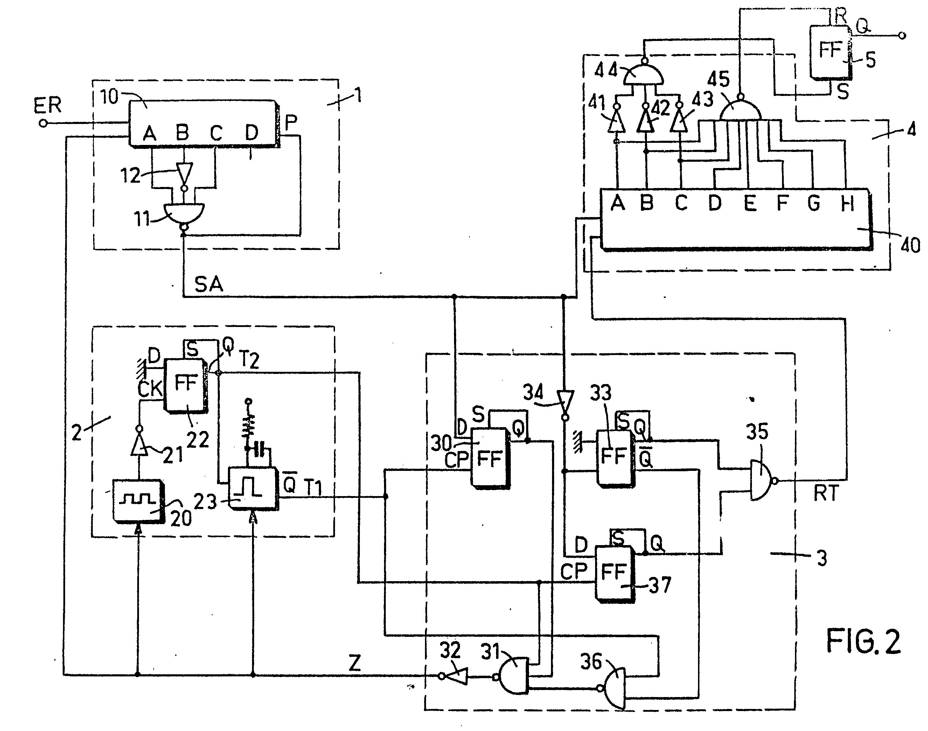

On a représenté à la figure 2 un exemple de réalisation du dispositif de la figure 1, les différents composants étant regroupés par blocs de façon à mettre en évidence la correspondance avec la figure 1.

La borne ER est reliée à l'entrée d'un compteur binaire à 4 bits 10 dont les sorties des étages A, B, C sont reliées à une porte NON—ET 11, par l'intermédiaire d'un inverseur 12 dans le cas de l'étage B. Donc, la porte 11, dont la sortie est normalement à l'état "1", émet une impulsion négative SA lorsque 5 erreurs ont été détectées. La sortie de la porte 11 est reliée à l'entrée d'inhibition P du compteur 10, de sorte que le comptage s'arrête lorsque 5 erreurs ont été détectées.

La base de temps 2 du dispositif comprend un générateur d'impulsions 20 fonctionnant à 10 Hz, un inverseur 21 monté à la sortie du générateur 20, une bascule de type D 22 dont l'entrée d'horloge est reliée à l'inverseur et dont la sortie Q est bouclée sur l'entrée S (SET) et un monostable 23 dont l'entrée est reliée à la sortie de la bascule 22 et dont la période est 2 ms. On obtient à la sortie de la bascule 22, du fait du bouclage précité, des impulsions très brèves $T_2$ à la fréquence de 10 Hz, donc toutes les 100 ms, et à la sortie $\bar{Q}$ du monostable 23 des signaux carrés $T_1$ de 2 ms de durée dont les fronts de descente sont déclenchés par lesdites impulsions $T_2$.

Le circuit logique 3 comprend une première bascule de type D 30 dont l'entrée d'horloge est reliée à sortie due monostable 23 et dont l'entrée D est reliée à la porte NON—ET 11, la sortie Q étant bouclée sur l'entrée S. La sortie Q est reliée à une entrée d'une porte NON—ET 31 qui produit, par l'intermédiaire d'un inverseur 32, des impulsions de remise à zéro du compteur 10, du générateur d'impulsions 20 et du monostable 23.

Une seconde bascule de type D 33 a son entrée d'horloge reliée à la porte NON—ET 11 par l'intermédiaire d'un inverseur 34. Cette bascule 33 a sa sortie $\bar{Q}$ reliée à l'entrée d'une porte NON—ET 35 dont la sortie constitue la sortie RT du circuit 3. La sortie $\bar{Q}$ de la bascule 33 est reliée à une entrée d'une porte NON—ET 36, dont l'autre entrée est reliée à la sortie du monostable 23, et dont la sortie est reliée à une entrée de la porte NON—ET 31.

Le circuit 3 comprend en outre une bascule de type D 37 dont l'entrée D est reliée à l'inverseur 34 et dont l'entrée d'horloge reçoit les impulsions émises par la bascule 22. La sortie Q de cette bascule est reliée à l'autre entrée de la porte NON—ET 35. En outre, les deux bascules 33 et 37 ont leur sortie Q reliée à l'entrée S, tout comme les bascules 22 et 30.

La sortie de la porte NON—ET 35 est reliée à l'entrée d'horloge d'un registre à décalage à 8 bits 40 qui reçoit les impulsions SA émises par la porte 11.

Les sorties A, B, C du registre 40 sont reliées par des inverseurs 41, 42, 43 à une porte NON—ET 44 dont la sortie est reliée à l'entrée S de la bascule de type D 5. D'autre part, les 8 sorties du registre 40 sont reliées à une porte NON—ET 45 dont la sortie est reliée à l'entrée de remise à zéro de la bascule 5. La sortie Q de la bascule 5 est reliée au dispositif de commutation mentionné précédemment.

On va décrire le fonctionnement de ce dispositif dans les trois cas possibles décrits plus haut.

Commençons par le troisième cas, où une impulsion $T_2$ est émise au bout de 100 ms avant qu'une impulsion SA ait été émise. La sortie de la porte 11 reste donc à l'état "1".

La bascule 30 reste à l'état "1", son état n'est pas modifié par le front de montée du signal de sortie du monostable 23.

La sortie de l'inverseur 34 reste à "0", et la bascule 33 reste également à l'état "1". En revanche, la bascule 37 ayant son entrée D à "0" et son entrée d'horloge reliée à la bascule 22, passe à l'état "0" lorsqu'elle reçoit l'impulsion correspondant à l'écoulement des 100 ms, puis repasse immédiatement à "1" du fait du bouclage. L'impulsion négative ainsi émise est transmise par la porte NON—ET 35 dont l'autre entrée est à l'état "1".

Cette impulsion, appliquée à l'entrée d'horloge du registre 40, provoque l'enregistrement d'un "1" dans le registre, qui apparaît à la sortie A.

La porte NON—ET 31 a ses entrées reliées aux bascules 30 et 33 (via la porte 36) à l'état "1". Par conséquent, l'émission de l'impulsion $T_2$ par la bascule 22 engendre à la sortie de la porte 31 une impulsion positive inversée par l'inverseur 32. L'impulsion négative résultante remet à zéro le compteur 10, le générateur 20 et le monostable 23.

Supposons maintenant que cinq erreurs ont été détectées en moins de 2 ms, donc qu'une impulsion SA est émise avant que le monostable 23 produise une impulsion $T_1$.

L'entrée D de la bascule 30 passe alors à l'état "0". Le front arrière montant du signal $T_1$ issu du monostable 23 déclenche un changement d'état de la bascule 30 qui retourne aussitôt à l'état "1". Elle émet donc une impulsion négative appliquée à la porte NON—ET 31.

La sortie de l'inverseur 34 passe à l'état "1" et par conséquent la bascule 33 émet une impulsion au moment où l'impulsion SA est émise (et non à la fin des 2 ms, comme la bascule 30).

La bascule 37 reste à l'état "1" puisque son entrée d'horloge ne reçoit une impulsion qu'au bout de 100 ms ($T_2$).

De ce fait, l'impulsion émise par la bascule 33 traverse la porte NON—ET 35 et provoque l'enregistrement d'un "0" dans le registre 40.

La remise à zéro du système n'a lieu qu'après écoulement du temps $t_1$, car la porte 31 ne reçoit une impulsion de la bascule 30 que lorsque le monostable 23 a émis une impulsion $T_1$.

Envisageons enfin le cas où une impulsion SA est émise au bout d'un temps t compris entre 2 et 100 ms.

Lors de l'émission de l'impulsion SA, la bascule 30 ne change pas d'état puisqu'elle ne reçoit pas d'impulsion du monostable 23. La bascule 33 émet une impulsion puisqu'un front montant est appliqué à son entrée d'horloge.

La bascule 37 reste à l'état "1", car son entrée d'horloge reste à l'état "1". L'impulsion émise par la bascule 33 traverse par conséquent la porte 35 et déclenche l'enregistrement d'un "0" dans le registre 40.

La remise à zéro du système est immédiate. En effet, la sortie de la bascule 30 reste à l'état "1", de même que celle de la bascule 22, le temps $t_2$ n'étant pas écoulé. En revanche, la porte 36 émet une impulsion positive, car la sortie du monostable 23 reste à "1" et la bascule 33 émet une impulsion positive. L'impulsion positive émise par la porte 36 traverse la porte 31 en changeant de signe et, après inversion par l'inverseur 32, assure la remise à zéro du système.

La demande de commutation est produite par la bascule 5 lorsque les sorties A, B, C sont toutes à l'état "0", ce qui suppose que trois impulsions SA ont été enregistrées en trois périodes de comptage consécutives.

La remise à zéro de la bascule 5 se produit lorsque toutes les sorties du registre 40 sont à l'état "1", ce qui correspond à huit périodes de comptage consécutives sans émission d'impulsion SA.

**Revendications**

1. Procédé de comptage d'erreurs dans une liaison hertzienne numérique en vue de produire une demande de commutation sur un canal de secours lorsque la qualité de la liaison devient insuffisante, caractérisé par le fait qu'on compte chaque fois les erreurs sur des périodes de comptage qui s'achèvent lorsqu'un nombre fixe N d'erreurs a été compté, mais qui ne dépassent pas une durée $t_2$, les périodes de comptage se succédant sans interruption, sauf dans le cas où N erreurs sont comptées en un temps inférieur à une durée $t_1$ inférieure à $t_2$, auquel cas une nouvelle période de comptage ne commence qu'après écoulement de la durée $t_1$, et on émet une demande de commutation lorsqu'au cours d'une série de $n_1$ périodes consécutives, un comptage de N erreurs a eu lieu à chaque période.

2. Procédé selon la revendication 1, dans lequel, lorsqu'une demande de commutation a été effectuée, on ne déclenche la commutation inverse que lorsque pendant $n_2$ périodes consécutives, $n_2$ étant supérieur à $n_1$, moins de N erreurs sont comptées à chaque période.

3. Dispositif de comptage pour la mise en oeuvre du procédé selon la revendication 1, caractérisé par le fait qu'il comprend un compteur d'erreurs (1) produisant un signal d'erreur (SA) lorsqu'il a compté N erreurs, une base de temps (2) définissant une période $t_1$ et une seconde période $t_2 > t_1$, à partir de la même origine des temps, un registre (40) relié au compteur (1), un circuit logique (3) relié à la base de temps, au compteur et agencé pour remettre à zéro le compteur et la base de temps dès l'émission d'un signal d'erreur, ou au bout d'un temps $t_2$ si aucun signal d'erreur n'est émis, les périodes de comptage se succédant ainsi sans interruption sauf dans le cas où un signal d'erreur est émis en un temps inférieur à $t_1$, la remise à zéro n'ayant alors lieu du'à l'issue du temps $t_1$, et un circuit (5, 41—45) délivrant une demande de commutation lorsque le registre (40) a enregistré $n_1$ signaux d'erreur en $n_1$ périodes consécutives.

4. Dispositif selon la revendication 3, caractérise par le fait que le circuit logique (3) est relié à l'entrèe d'horloge du registre (40) de manière que, en l'absence de signal d'erreur (SA) pendant une période, le registre enregistre un signal de non-comptage, d'état logique opposé au signal d'erreur, le circuit (5, 41, 45) déclenchant la commutation inverse, après une demande de commutation lorsque le registre a enregistré $n_2$ signaux de non-comptage en $n_2$ périodes consécutives, $n_2$ étant supérieur à $n_1$.

5. Dispositif selon la revendication 3, caractérisé par le fait que le circuit logique (3) comprend une première bascule (30) reliée à l'entrée au compteur (1) et recevant les signaux $T_1$, produits par la base de temps (2) à la fin de chaque période $t_1$, en tant que signaux d'horloge, et ayant sa sortie reliée au compteur (1) et à la base de temps (2) en vue de leur remise à zéro, une seconde bascule (33) reliée, à l'entrée, au compteur (1) pour recevoir, en tant que signaux d'horloge, les signaux d'erreur (SA) produits par le compteur (1) et dont la sortie Q est reliée à l'entrée d'horloge du registre (40) et la sortie $\overline{Q}$ est reliée au compteur (1) et à la base de temps (2) en vue de leur remise à zéro, et une troisième bascule (37) reliée, à l'entrée, au compteur (1) et recevant les signaux $T_2$, produits par la base de temps (2) à la fin de chaque période $t_2$, en tant que signaux d'horloge, et ayant sa sortie reliée à l'entrée d'horloge du registre (40).

**Patentansprüche**

1. Verfahren zum Zählen von Fehlern in einer numerischen Funkverbindung im Hinblick auf die Erzeugung einer Aufforderung zur Umschaltung auf einen Hilfskanal wenn die Qualität der Verbindung ungenügend wird, gekennzeichnet durch die Tatsache, daß man jedesmal die Fehler über Zählperioden zählt welche ablaufen, wenn eine feste Zahl von N Fehlern gezählt worden ist, aber eine Zeitdauer von $t_2$ nicht überschreiten, wobei die Zählperioden ohne Unterbrechung aufeinanderfolgen, außer im Falle daß N Fehler innerhalb einer Zeitdauer $t_1$ die unterhalb von $t_2$ liegt gezählt werden wobei in diesem Falle eine neue Zählperiode erst nach Ablauf der Zeitdauer $t_1$ beginnt, und man eine Aufforderung zur Umschaltung aussendet, wenn im laufe einer Serie von $n_1$ aufeinanderfolgenden Perioden in jeder Periode eine Zählung N Fehlern stattgefunden hat.

2. Verfahren nach Anspruch 1 bei dem man, wenn eine Aufforderung zur Umschaltung bewirkt worden ist, die inverse Umschaltung erst auslöst, wenn innerhalb von $n_2$ aufeinanderfolgenden Perioden, wobei $n_2$ größer als $n_1$ ist, weniger als N Fehler pro Periode gezählt worden sind.

3. Zählvorrichtung zur Durchführung des Verfahrens nach Anspruch 1, gekennzeichnet durch die Tatsache, daß sie einen Fehlerzähler (1) aufweist, der ein Fehlersignal (SA) erzeugt, wenn er N Fehler gezählt hat, und eine Zeitbasis (2), welche eine Periode $t_1$ und eine zweite Periode $t_2 > t_1$, die zum gleichen Zeitausgangspunkt beginnen, festlegt und ein mit dem Zähler (1) verbundenes Register (40), sowie einen logischen Schaltkreis (3), der mit der Zeitbasis und dem Zähler verbunden und so ausgelegt ist, daß er den Zähler und die Zeitbasis nach Aussendung eines Fehlersignals oder am Ende eines Zeitraumes $t_2$, wenn kein Fehlersignal ausgesendet worden ist, auf Null zurücksetzt, wobei die Zählperioden ohne Unterbrechung aufeinanderfolgen außer im Falle, daß ein Fehlersignal innerhalb eines Zeitraumes unterhalb $t_1$ ausgesendet worden ist, in welchem Falle die Rücksetzung auf Null erst nach Ablauf der Zeitdauer $t_1$ stattfindet, und daß eine Schaltkreis (5, 41—45) vorhanden ist, welcher eine Aufforderung zur Umschaltung liefert, wenn das Register (40) in $n_1$ aufeinanderfolgenden Perioden $n_1$ Fehlersignale gespeichert hat.

4. Vorrichtung nach Anspruch 3, gekennzeichnet durch die Tatsache, daß der logische Schaltkreis (3) mit dem Takteingang des Registers (40) so verbunden ist, daß bei Abwesenheit eines Fehlersignals während einer Periode das Register ein Nicht-Zählsignal speichert, dessen logischer Zustand entgegengesetzt dem Fehlersignal ist und der Schaltkreis (5, 41—45) die inverse Umschaltung nach einer Aufforderung zur Umschaltung auslöst, wenn das Register in $n_2$ aufeinanderfolgenden Perioden $n_2$ Nicht-Zählsignale gespeichert hat, wobei $n_2$ größer als $n_1$ ist.

5. Vorrichtung nach Anspruch 3, gekennzeichnet durch die Tatsache, daß der logische Schaltkreis (3) ein erstes Flip-Flop (30) aufweist, dessen Eingang mit dem Zähler (1) verbunden ist, und das die Signale $T_1$ die von der Zeitbasis (2) am Ende jeder Periode $t_1$ erzeugt werden, als Taktsignale erhält und dessen Ausgang mit dem Zähler (1) und der Zeitbasis (2) im Hinblick auf ihre Rücksetzung auf Null verbunden ist, und ein zweites Flip-Flop (33) dessen Eingang mit dem Zähler (1) verbunden ist um als Taktsignal die Fehlersignale (SA) die vom Zähler (1) erzeugt werden zu erhalten und dessen Q-Ausgang mit dem Takteingang des Registers (40) verbunden ist, und dessen $\overline{Q}$-Ausgang mit dem Zähler (1) und der Zeitbasis (2) im Hinblick auf ihre Rücksetzung auf Null verbunden ist, sowie ein drittes Flip-Flop (37), dessen Eingang mit dem Zähler (1) verbunden ist, und das die Signale $T_2$, die von der Zeitbasis (2) am Ende jeder Periode $t_2$ erzeugt werden, als Taktsignale erhält, und dessen Ausgang mit dem Takteingang des Registers (40) verbunden ist.

## Claims

1. Method for counting errors in a digital hertzian link with a view to produce a demand of commutation onto an emergency channel when the quality of the link becomes deficient, characterized in that the errors are each time counted during counting periods which terminate when a fixed number N of errors has been counted, but which do not exceed a time interval $t_2$, the counting periods following each other without interruption, except in the case when N errors are counted within a time interval shorter than a time interval $t_1$ shorter than $t_2$, whereby a new counting period shall begin only when the time interval $t_1$ is lapsed, and a demand of commutation is produced when for a series of $n_1$ consecutive periods, N errors have been counted for each period.

2. Method according to claim 1, wherein, once a demand of commutation has been made, the reverse commutation is triggered off only when, for $n_2$ consecutive periods, $n_2$ being greater than $n_1$, less than N errors are counted for each period.

3. Counting device for implementing the method according to claim 1, characterized in that it comprises an error counter (1) producing an error signal (SA) when N errors have been counted, a time base (2) defining a period $t_1$ and a second period $t_2 > t_1$ from the same time origin, a register (40) connected to the counter (1), a logic circuit (3) connected to the time base, the counter and arranged for resetting the counter and the time base upon emission of an error signal, or at the end of a time interval $t_2$ if no error signal is emitted, the counting periods thus following each other without interruption except in the case when an error signal is emitted within a time interval shorter than $t_1$, the resetting thus occurring only at the end of the time interval $t_1$, and a circuit (5, 41—45) generating a demand of commutation when the register (40) has registered $n_1$ error signals within $n_1$ consecutive periods.

4. Device according to claim 3, characterized in that the logic circuit (3) is connected to the clock input of the register (40) so that, in the absence of an error signal during a period, the register registers a non-counting signal, having a logic state opposed to the error signal, the circuit (5, 41—45) triggering off the reverse commutation after a demand of commutation when the register has registered $n_2$ non-counting signals within $n_2$ consecutive periods, $n_2$ being greater than $n_1$.

5. Device according to claim 3, characterized in that the logic circuit (3) comprises a first flip-flop (30) connected at the input side to the counter (1) and receiving the signals $T_1$, produced by the time base (2) at the end of each period $t_1$, as clock signals, and having its output connected to the counter (1) and to the time base (2) for their resetting, a second flip-flop (33) connected, at the input side, to the counter (1) for receiving, as clock signals, the error signals (SA) produced by the counter (1) and the output Q of which is connected to the clock input of the register (40) and the output $\overline{Q}$ is connected to the counter (1) and to the time base (2) for their resetting, and a third flip-flop (37) connected, at the input side, to the counter (1) and receiving the signals $T_2$, produced by the time base (2) at the end of each period $t_2$, as clock signals, and having its output connected to the clock input of the register (40).

FIG.1

FIG.2